Europäisches Patentamt

**European Patent Office**

**Office européen des brevets**

(19)

(11) Veröffentlichungsnummer: **0 033 103**
A2

# EUROPÄISCHE PATENTANMELDUNG

(12)

(21) Anmeldenummer: **81100314.4**

(22) Anmeldetag: **16.01.81**

(51) Int. Cl.³: **G 02 B 5/16**

(30) Priorität: **24.01.80 DE 3002498**

(43) Veröffentlichungstag der Anmeldung:
**05.08.81 Patentblatt 81/31**

(84) Benannte Vertragsstaaten:
**AT BE CH DE FR GB IT LI LU NL SE**

(71) Anmelder: **SIEMENS AKTIENGESELLSCHAFT Berlin
und München
Postfach 22 02 61
D-8000 München 22(DE)**

(72) Erfinder: **Oestreich, Ulrich, Dipl.-Ing
Karl-Witthalm-Strasse 15
D-8000 München 70(DE)**

(72) Erfinder: **Zeidler, Günter, Dr.
Weidenstrasse 25
D-8034 Germering(DE)**

(54) **Nachrichtenkabel aus mehreren Lichtwellenleitern und Verfahren zu seiner Herstellung.**

(57) Die Erfindung betrifft ein Nachrichtenkabel mit mehreren Lichtwellenleitern, von denen jeweils mindestens einer in einer Hülle angeordnet ist und diese durch die Hüllen gebildeten Adern miteinander verseilt und die so gebildeten Bündel durch eine sie umfassende Halterung in ihrer Lage fixiert sind. Die Halterung (HA) besteht aus einem Stoff, der unter dem Einfluß einer eingebrachten Füllmasse (FM) erweicht oder zerfällt.

EP 0 033 103 A2

SIEMENS AKTIENGESELLSCHAFT          Unser Zeichen
Berlin und München
                                    80 P 6 5 1 0 E

Nachrichtenkabel aus mehreren Lichtwellenleitern und
Verfahren zu seiner Herstellung

Die Erfindung bezieht sich auf ein Nachrichtenkabel mit mehreren Lichtwellenleitern, von denen jeweils mindestens einer in einer Hülle angeordnet ist und diese durch die Hüllen gebildeten Adern miteinander verseilt und die so gebildeten Bündel durch eine sie umfassende Halterung in ihrer Lage fixiert sind.

Ein Kabel dieser Art ist aus der DE-OS 27 23 659 bekannt, wobei durch das Umspinnen mit einer Haltewendel in unmittelbarer Nähe des Verseilpunktes der einmal erreichte Verseilzustand gegen Aufseilen gesichert wird. Die Haltewendel selbst besteht üblicherweise aus einem Kunststoffband oder einer natürlichen oder synthetischen Form (PE, PVC, usw.). Da die Haltewendel jedoch zumindest in einem gewissen Umfang fest auf den einzelnen, die Lichtwellenleiter enthaltenden polsternden Hüllen aufsitzen muß, besteht die Gefahr, daß diese durch die Haltewendel mechanisch beansprucht und die Fasern deformiert werden. Andererseits ist, vor allem bei der SZ-Verseilung, eine Sicherung gegen ein Aufspringen bzw. Lösen des Verseilzustandes unerläßlich.

Aus der DE-OS 24 29 670 ist ein optisches Nachrichtenkabel bekannt, bei dem im Inneren loser Hüllen einzelne oder Bündel von Lichtwellenleitern angeordnet sind und diese losen Hüllen um ein zentrales Kernelement herum verseilt sind. Alle so verseilten Elemente werden insgesamt von einem äußeren Mantel umfaßt und zusammengehalten. Dabei sind die Zwischenräume zwischen den einzelnen Hüllen und dem äußeren gemeinsamen Mantel

Jb 1 Kom / 17.01.1980

mit einem pastenartigen Medium ausgefüllt, welches
sich über die gesamte Länge des Kabels erstreckt.

Der vorliegenden Erfindung liegt die Aufgabe zugrunde,
bei einem Nachrichtenkabel der eingangs genannten Art
die durch die Verwendung von Halterungen (gegen das
Aufseilen) gegebenen Schwierigkeiten in einfacher Weise
zu beseitigen. Gemäß der Erfindung wird dies dadurch
erreicht, daß die Halterung aus einem Stoff besteht,
der unter dem Einfluß einer eingebrachten Füllmasse
erweicht oder zerfällt.

Damit wird die zunächst vorhandene Deformation der umhüllten Lichtwellenleiter beseitigt. Für die Halterung
kommen alle stark quellfähigen Materialien wie mittelmolekulares PE niedriger Dichte, (LDPE) quellfähige Polyester,
Polystyrol, thermoplastische Gummi (TPR) auf Äthylenbasis usw. in Frage.

Auf diese Weise ist sichergestellt, daß die einzelnen
Hüllen von der sie umfassenden Halterung nur während
des Herstellungsprozesses für eine relativ kurze Zeit
z.B. von Stunden oder Tagen fixiert sind, während
durch die stattgefundene Erweichung oder Auflösung
die Halterung später, d.h. beim fertigen Kabel bzw.
bei der Verlegung keine Kräfte mehr auf die einzelnen
Hüllen ausüben kann. Damit ist im Endergebnis ein
Kabel erhalten, welches die Eigenschaften eines praktisch ohne eine Haltewendel oder dergleichen hergestellten Kabels hat, während aber gleichzeitig beim
Herstellungsprozeß die einzelnen Hüllen in ihrer jeweiligen Verseillage gehalten und gesichert sind.

Die Anwendungen der Erfindung ist dann von besonderem
Vorteil, wenn die sogenannte SZ-Verseilung angewendet
wird, d.h. wenn die Drehrichtung in periodischen Abständen gewechselt wird, weil dabei von den Umkehrstellen

aus das Lichtwellenleiterbündel aufzugehen bestrebt
ist.

Besonders vorteilhaft ist es, wenn der in der Füllmasse
enthaltene Weichmacher einerseits und die stoffliche
Zusammensetzung der Halterung andererseits so aufeinander abgestimmt werden, daß der in der Füllmasse enthaltene Weichmacher die Halterung erweicht. Dadurch ist
ohne zusätzlichen Aufwand die gewünschte Erweichung der
Halterung möglich.

Es besteht aber auch die Möglichkeit, bei der Füllmasse oder
in einer sonst geeigneten Weise zusätzliche, speziell
auf die Zusammensetzung der Halterung einwirkende und
diese erweichende Weichmacher vorzusehen.

Die Aufbringung der Halterung kann in geeigneter Weise,
z.B. durch Verseilung, Umspinnung, vorgenommen werden;
es besteht aber auch die Möglichkeit, die Halterung
nur in bestimmten Abständen ringförmig auf die Hüllen
aufzubringen.

Die Erfindung betrifft weiterhin ein Verfahren zur Herstellung eines Nachrichtenkabels, welches dadurch gekennzeichnet ist, daß nach der Verseilung die Füllmasse
eingebracht wird und auf die so gebildeten verseilten
Bündel die Halterung aufgebracht wird, die dann im
Lauf der Zeit erweicht bzw. zerfällt.

Die Erfindung wird nachfolgend anhand eines Ausführungsbeispiels näher erläutert. Bei dem im Schnitt dargestellten optischen Nachrichtenkabel ist auf einem Kern
KE, der aus einem entsprechenden Kunststoff- oder
Metallseil bestehen kann, ein Bündel von sieben Lichtwellenleitern aufgeseilt. Diese Lichtwellenleiter bestehen aus einer optischen Faser FA, die mit einer
weichen, aber gegen das Füllmittel beständigen polsternden, festaufsitzenden Hülle RH versehen ist (Material: PVR, Silikongummi, PU-Akrylat u.Ä.). Die einzelnen Hüllen RH, deren Zwischenräume durch eine Füllmasse FM geschlossen sind, werden außen von einer Halterung HA in Form eines dünnen Rohres, Schlauches oder einer Umspinnung zusammengehalten. Über dieser Halterung kann ein weiterer,alle sieben Hüllen RH umschließender Mantel MA vorgesehen sein. Es ist auch möglich, auf den Kern KE zu verzichten und nur umhüllte Fasern im Inneren des Mantels MA vorzusehen. Schließlich können anstelle der dargestellten Siebenerbündel auch entsprechende andere, z.B. Dreier- oder Viererbündel gebildet werden.

Die Halterung HA besteht aus einem Material, dessen Stärke sehr gering gewählt ist, weil sie lediglich die Aufgabe hat, die einzelnen Hüllen RH zusammenzuhalten. Weiterhin ist der Stoff, aus dem die Halterung HA gebildet ist, in seiner chemischen Zusammensetzung so gewählt, daß er durch entsprechende, im Inneren des Mantels vorhandene, insbesondere in der Füllmasse FM enthaltene chemische Stoffe im Laufe der Zeit weich gemacht werden. Besonders vorteilhaft läßt sich ein Erweichen der Halterung HA dann durchführen, wenn in der Füllmasse FM ein Weichmacher enthalten ist, der im Lauf der Zeit, z.B. innerhalb von einigen Stunden oder auch von Tagen eine Erweichung der Halterung HA bewirkt.

Allgemein können vorteilhaft folgende Materialkombinationen verwendet werden:
Füllmasse: Pastöse Masse mit aromatischen, naphtenischen und esterhaltigen Ölen oder sogar Lösungsmitteln.
Halterung: mittelmolekulares Polyäthylen niedriger Dichte (LDPE), Polystyrol (PS),

0033103
80 P 6510 E

thermoplastischer Gummi (TPR)
Polyäthylenteraphtalat (PETP) und
bestimmte Polyurethane (PURs)

Faserhüllen: aus schwach oder garnicht quellenden, vollvernetzten Stoffen (PVR, Silikongummi, Polyvinyl-Akrylat...), wobei die Quellfähigkeit bei sonst gleichwertigen Stoffen vom Vernetzungsgrad bestimmt wird.

Es ist auch möglich, in der Füllmasse FM zusätzliche, speziell auf die Zusammensetzung der Halterung HA einwirkende und diese erweichende Weichmacher vorzusehen. Dann kann die Füllmasse FM in ihren chemischen Eigenschaften so gewählt werden, wie es den jeweiligen Betriebsbedingungen entspricht. Durch den Zusatz des allein auf die Halterung HA wirkenden Weichmachers wird dieser in der gewünschten Zeit dann in die gewünschte Weichekonsistenz gebracht.

Von erheblichem Vorteil ist die Anwendung der Erfindung bei SZ-verseilten umhüllten Fasern, weil bei dieser Verseilart eine besonders starke Tendenz zum Aufseilen der einzelnen Verseilelemente gegeben ist. Die Halterung HA kann als eine fortlaufende Haltewendel bei der Herstellung des Kabels um die Hülle RH herum in helixförmiger Anordnung angebracht sein. Es ist aber auch möglich, die Halterung HA als Geflecht oder als Umspinnung auf die Hüllen RH aufzubringen. Das dargestellte Kabel kann auch ohne einen äußeren Mantel MA hergestellt sein; in diesem Fall stellt es ein Grundbündel für die Verseilung zu einem größeren Kabel dar.

Es ist auch möglich, den die Erweichung oder das Zerfallen der Halterung HA bewirkenden Stoff (ggf. zusätzlich) außen auf die Halterung HA aufzubringen, also z.B. zwischen HA und dem Mantel MA.

Die Halterung HA kann auch durch einen Schlauch aus den genannten Materialien ersetzt werden, der in der ihn ggf. von beiden Seiten berührenden Füllmasse quillt. Dieser Schlauch wird beim Herstellprozeß, d.h. unmittelbar nach der Verseilung auf den äußeren Umfang, Hüllen aufgebracht (z.B. durch einen Spritzvorgang) und wird zweckmäßig direkt nach Abschluß des Spritzvorganges z.B. durch einen Reckprozeß gekühlt und mit geeigneten Mitteln am Mitdrehen gehindert. Hierzu können federnd angepreßte Räder verwendet werden, die mit einem entsprechenden Polsterbelag versehen sind und im Kühlbad laufen. Die zweite Schneckenpresse und der doppelte Füllvorgang machen den erforderlichen Durchmesser größer, so daß diese Lösung in Sonderfällen von Bedeutung sein wird.

Die die Lichtwellenleiter FA umgebenden Hüllen RH und der äußere Mantel MA müssen aus solchen Stoffen bestehen, die beständig gegen die die Erweichung oder das Quellen bzw. Zerfallen bewirkenden Substanzen sind.

10 Patentansprüche
1 Figur

<u>Patentansprüche</u>

1. Nachrichtenkabel mit mehreren Lichtwellenleitern, von denen jeweils mindestens einer in einer Hülle angeordnet ist und diese durch die Hüllen gebildeten Adern miteinander verseilt und die so gebildeten Bündel durch eine sie umfassende Halterung in ihrer Lage fixiert sind, d a d u r c h   g e k e n n z e i c h n e t , daß die Halterung (HA) aus einem Stoff besteht, der unter dem Einfluß einer eingebrachten Füllmasse (FM) erweicht oder zerfällt.

2. Nachrichtenkabel nach Anspruch 1, d a d u r c h g e k e n n z e i c h n e t , daß die in der Füllmasse (FM) enthaltenen Weichmacher oder Lösungsmittel die Halterung (HA) erweicht oder zerfallen läßt.

3. Nachrichtenkabel nach Anspruch 1, d a d u r c h g e k e n n z e i c h n e t , daß in der Füllmasse (FM) zusätzliche, speziell auf die Zusammensetzung der Halterung (HA) einwirkende und diese erweichende bzw. zerfallen lassende Weichmacher vorgesehen sind.

4. Nachrichtenkabel nach einem der vorhergehenden Ansprüche, d a d u r c h   g e k e n n z e i c h n e t , daß die die Lichtwellenleiter enthaltenden Hüllen (RH) SZ-verseilt sind.

5. Nachrichtenkabel nach einem der vorhergehenden Ansprüche, d a d u r c h   g e k e n n z e i c h n e t , daß die Lichtwellenleiter enthaltenden Hüllen (RH) als Grundbündel verseilt sind.

6. Nachrichtenkabel nach einem der vorhergehenden Ansprüche, d a d u r c h   g e k e n n z e i c h n e t , daß die Halterung (HA) als Haltewendel ausgebildet ist.

0033103

80 P 6510 E

7. Nachrichtenkabel nach einem der Ansprüche 1 bis 5, d a d u r c h   g e k e n n z e i c h n e t , daß die Halterung als Geflecht oder Umspinnung ausgebildet ist.

8. Nachrichtenkabel nach einem der vorhergehenden Ansprüche,   d a d u r c h   g e k e n n z e i c h n e t , daß die Hülle (RH) für die Lichtwellenleiter und der Mantel (MA) beständig gegen quellende oder lösende Substanzen sind.

9. Nachrichtenkabel nach einem der Ansprüche 1 bis 6, d a d u r c h   g e k e n n z e i c h n e t , daß die Halterung (HA) als Schlauch ausgebildet ist.

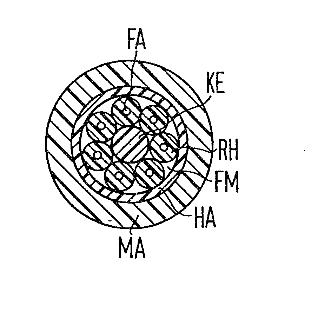

10. Verfahren zur Herstellung eines Nachrichtenkabels nach einem der vorhergehenden Ansprüche,   d a d u r c h   g e k e n n z e i c h n e t ,   daß nach der Verseilung die Füllmasse eingebracht wird und auf die so gebildeten verseilten Bündel die Halterung aufgebracht wird, die dann im Lauf der Zeit erweicht bzw. zerfällt.